# EUROPEAN PATENT APPLICATION

(11) **EP 1 746 802 A2**
(43) Date of publication of application: **24.01.2007**
(21) Application number: 06253644.6
(22) Date of filing: 12.07.2006
(51) Int. Cl.: H04L 29/06

(54) **User authentication in connection with a security protocol**

(30) Priority: 19.07.2005 FI 20050770
(71) Applicant: SSH Communications Security Corp., 00380 Helsinki (FI)
(72) Inventor: Rossi, Markku Tapio, 04430 Järvenpää (FI); Rinne, Timo Johannes, 00100 Helsinki (FI); Lehtinen, Sami Juhani, 00390 Helsinki (FI); Harjula, Tero Petteri, 02360 Espoo (FI)
(74) Representative: Ruuskanen, Juha-Pekka

(57) **Abstract**

A method, device, system and computer program for authenticating a user in connection with a security protocol comprising a plurality of authentication methods are described. A packet data connection is established to a remote node. An authentication procedure of the security protocol is initiated with the remote node via the packet data connection. State information is provided for the authentication procedure and cumulative state information is taken into account in selection of at least one appropriate authentication method when carrying out the authentication procedure.

## Description

The present invention relates to user authentication in connection with a security protocol. In particular, the invention relates to user authentication for a security protocol for transmitting packet data over a network.

Data transmission over packet data networks, in particularly over Internet Protocol (IP) based networks, is very common nowadays. There are, however, risks in using the Internet or other public data networks for communications. IP-based networks face threats such as viruses, malicious crackers and eavesdroppers.

Virus-scanning software and firewalls are widely used to prevent unauthorized access to internal networks from public networks. When confidential data is transmitted over a public packet data network, the data should be encrypted and the sender and receiver of the data should be authenticated. The security concerns relating to data transmission over public networks can be addressed in a variety of ways. One example is the use of the Internet Security protocol (IPSec) on the IP level. Another example is the use of a security protocol above the IP level.

The Secure Shell protocol is a security protocol that is typically used over the Transfer Control Protocol (TCP) and the Internet Protocol. In principle, the Secure Shell can be used above any protocol providing reliable data streams. A protocol proving reliable data streams refers here to a protocol ensuring that in normal situations a receiver receives data packets in the sending order and all sent data packets are received. The Secure Shell protocol provides encryption and integrity of data and authentication of the sender and receiver of data.

The Secure Shell protocol is in the following used as an example of a security protocol. The Secure Shell is being standardized in the SecSh Working Group of the Internet Engineering Task Force. The Secure Shell protocol is a packet protocol, and the protocol packets contain information about the length of the protocol packet and about padding length. The Secure Shell protocol packet then contains the actual payload and the padding data.

A Secure Shell protocol session between two endpoints is typically established in the following manner. First, a TCP connection is established between the endpoints for an initial key exchange. Thereafter the endpoints authenticate each other and agree on various security parameters by transmitting protocol messages over the TCP connection. After a successful authentication and security parameter negotiation, the negotiated security parameters define encryption and data integrity algorithms that are used for Secure Shell protocol packets transmitted over the TCP connection. Some further transmission parameters, for example data compression algorithms, may be defined for the data to be transmitted over the TCP connection.

There may be a plurality of channels within a single Secure Shell session. These channels share the authentication and negotiated security parameters, and data relating to all channels is transmitted over the TCP connection established for the Secure Shell session. New channels may be opened and existing channels may be closed during a Secure Shell session. The channels may relate, for example, to various applications using the Secure Shell session for data transfer.

User authentication is performed in the Secure Shell protocol directly after the initial key exchange. The authentication is valid for the duration of the Secure Shell session. Typically there is a plurality of available authentication methods, and a successful authentication using any of these authentication methods is considered to be a valid authentication. Alternatively, successful authentication using all available authentication methods may be required for a valid authentication. The outcome of the authentication procedure is a confirmation that the user possesses the relevant authentication information (for example, a user identifier and a corresponding password). Access control to various services is done separately after authentication based on user rights, which are determined based on access credentials associated with user identifiers.

The authentication procedure of the Secure Shell protocol thus provides information about the user identifier and a confirmation of the user possessing the authentication information associated with the user identifier. Successful authentication is the Secure Shell protocol is a requirement for establishing the Secure Shell session. The authentication of the Secure Shell protocol thus supports Mandatory Access Control, where authentication is required before access to an information system. In some situations the quite rigid authentication procedure of the Secure Shell protocol may cause some problems. For example, the present authentication is unable to support Content Based Information Security or Role Based Access Control. In Content Based Information Security, access to information and/or services in controlled based on various parameters defined in a security policy. In Role Bases Access Control, a user is typically given a role or a set of roles, and access to information/services is controlled based on the roles.

It is appreciated that although above reference is made mainly to the Secure Shell protocol, the problems may be relevant also for other security protocols.

Embodiments of the present invention aim to provide method for authenticating a user in connection with a security protocol in a flexible manner.

An embodiment relates to a method for authenticating a user in connection with a security protocol, the method comprises establishing a packet data connection to a remote node, initiating an authentication procedure of the security protocol comprising a plurality of authentication methods with the remote node via the packet data connection, and providing state information for the authentication procedure. At least one authentication method is selected in the method based on cumulative state information.

Another embodiment relates to a device comprising means for establishing a packet data connection to a remote node, means for carrying out an authentication procedure between the device and the remote node using a security protocol comprising a plurality of authentication methods and means for providing state information for the authentication procedure. The means for carrying out the authentication procedure are configured to select at least one authentication method based on cumulative state information from the means for providing state information.

A yet another embodiment relates to a system comprising the device of the second embodiment.

In accordance with an embodiment a computer program product is provided, the computer product comprising program instructions executable by a computing device and configured to cause a computing device or a set of computing devices to perform the steps of the authentication procedure.

The means for carrying out an authentication procedure may be responsive also to the means for storing security policy information.

The authentication procedure may furthermore be dependent on security policy information.

There is furthermore provided a computer program product comprising program instructions executable by a computing device, configured to cause a computing device or a set of computing devices to perform the steps of any method in accordance with the invention.

A set of authentication method combinations for the authentication procedure may be determined based on the state information, each authentication method combination corresponding to a valid authentication. At least one authentication method leading to a valid authentication may be proposed to the remote node during the authentication procedure.

An authentication method of the authentication procedure may be adjusted based on the state information. The authentication procedure may be adjusted based on the state information. The pace with which the authentication procedure is executed may be adjusted based on the state information. At least one authentication method to be proposed to the client during the authentication procedure may be selected based on the state information. The authentication procedure may be adjusted to send to the client information indicating a failed authentication method in response to an executed authentication method, irrespectively of the outcome of the executed authentication method.

The state information may comprise information relating to the packet data connection, for example, a location of the remote node, a time of day of initiating the packet data connection, and/or a weekday of initiating the packet data connection.

State information associated with at least one authentication method may be stored during the authentication procedure. The state information associated with at least on authentication method may be, for example, information indicating whether an authentication method was executed successfully, information indicating strength of a successfully executed authentication method, and/or information received in certificates relating to an executed authentication method.

A request for state information associated with a user may be received from an application via an application programming interface.

A request for authenticating a user may be received from an application via an application programming interface, and the authentication procedure may be triggered for the user in response to the request.

State information associated with a user may be reported to an application via an application programming interface.

It may be checked whether state information associated with a user is in accordance with a service request received from the user. An authentication procedure for the user may be triggered if the state information associated with the user is not in accordance with the service request. The service may be provided in accordance with state information associated with the user.

A security protocol session with the remote node may be established in response to successfully carrying out the authentication procedure.

The authentication procedure may be a reauthentication procedure during a security protocol session. The security protocol may be a Secure Shell protocol and the authentication procedure may be carried out using a protocol extension mechanism.

The security protocol may be a Secure Shell protocol.

Security policy information may be taken into account in carrying out the authentication procedure.

Embodiments of the present invention will now be described by way of example only with reference to the accompanying drawings, in which:
Figure 1 shows schematically, as an example, a communication network and two nodes, where embodiments of the present invention are applicable;
Figure 2a shows, as an example, a flowchart of a method for authenticating a user in connection with a security protocol session in accordance with an embodiment of the invention;
Figure 2b shows, as an example, a flowchart of a further method for authenticating a user in connection with a security protocol session in accordance with an embodiment of the invention;
Figure 2c shows, as an example, a flowchart of a method for authenticating a user in connection with a security protocol session in accordance with an embodiment of the invention;
Figure 3a shows, as an example, a flowchart relating to proposing authentication methods in an embodiment of the invention;
Figure 3b shows, as an example, a further flowchart relating to proposing authentication methods in an embodiment of the invention;
Figure 4a shows, as an example, a sequence of authentication methods in an authentication procedure in accordance with an embodiment of the invention;
Figure 4b shows, as an example, a sequence of authentication methods in a further authentication procedure in accordance with an embodiment of the invention;
Figure 5 shows, as an example, a sequence of authentication methods in an authentication procedure in accordance with an embodiment of the invention;
Figure 6a shows, as an example, a flowchart of a method for authenticating a user in connection with a service request in accordance with an embodiment of the invention;
Figure 6b shows, as an example, a flowchart of a method for reporting authentication state information to an application in accordance with an embodiment of the invention;
Figure 6c shows, as an example, a flowchart of a method for reauthenticating a user in connection with a security protocol in accordance with an embodiment of the invention;
Figure 7 shows a block diagram of a security protocol server in accordance with an embodiment of the invention; and
Figure 8 shows, as an example, a flowchart relating to a protocol extension mechanism for the Secure Shell protocol.

In the following, embodiments of the invention are often discussed in detail with reference to the Secure Shell protocol, but it is appreciated that embodiments of the invention may be applicable in connection with any security protocol.

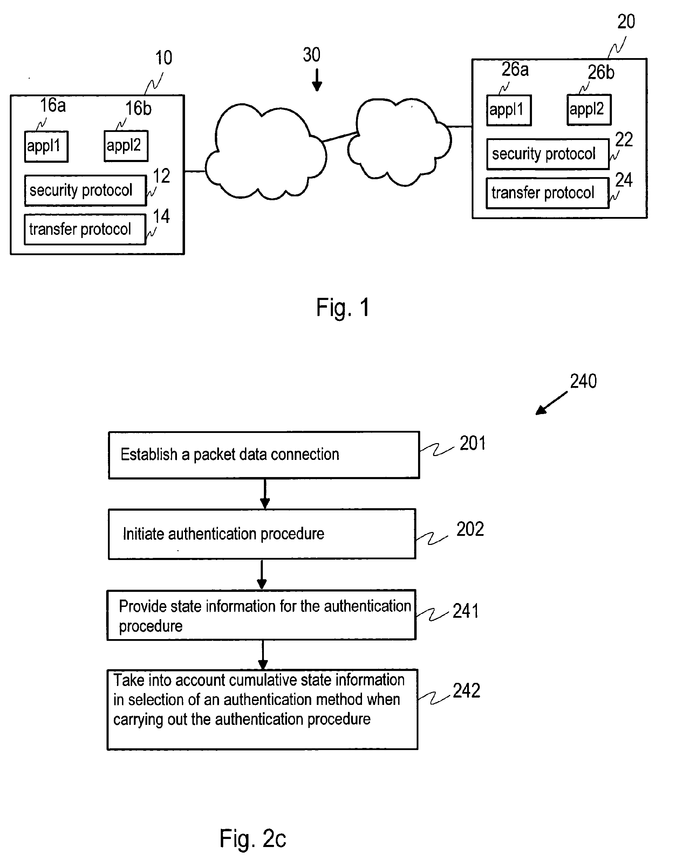

Figure 1 shows schematically a communication network and two nodes 10, 12 communicating via the communication network, for example via the Internet. The communication network may include various subnetworks, as shown in Figure 1. A security protocol is used to provide secure data transfer between the nodes 10 and 12 over the communication network. One of the nodes is typically a server and the other node is a client. The client contacts the server for forming a secure connection between the nodes.

Figure 1 shows schematically, as an example, a security protocol session 30 between two nodes 10, 20 in accordance with an embodiment of the present invention. Each of the two nodes 10, 20 has a security protocol entity 12, 22 providing the functionality of the security protocol. The security protocol entity is a computer program or part of a computer program. A security protocol session is a logical connection between security protocol entities 12, 22.

The data transfer for the security protocol entities 12, 22 is provided by transfer protocol entities 14, 24. In specific embodiments of the invention, the security protocol is a Secure Shell protocol and the transfer protocol is the Transfer Control Protocol (TCP). As discussed above, in principle the invention is applicable to any security protocol used on top of any reliable data transfer protocol. If the security protocol does not rely on support of a reliable transfer protocol, any transfer protocol may be applicable.

It is evident to a skilled person that the packet data connections of the transfer protocol are implemented using further protocol entities, such as Internet Protocol entities. The details of the lower protocols and the physical medium between the nodes 10, 20 are irrelevant for the present invention, and they are therefore not discussed in detail in the present description.

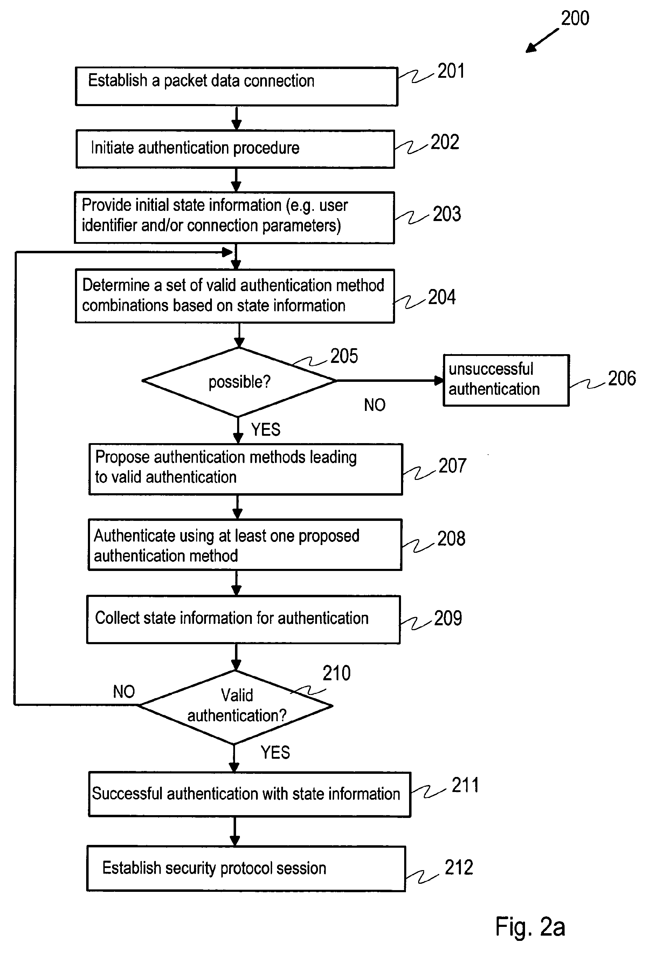

Figure 2a shows, as an example, a flowchart of a method 200 for authenticating a user in connection with a security protocol session in accordance with an embodiment of the invention. In step 201, a packet data connection is established between a local node and a remote node. Here the local node typically refers to a security protocol server. Typically the establishment of the packet data connection in step 201 is initiated by a client (the remote node). In step 202, an authentication procedure is initiated for authenticating the remote node/user. The authentication procedure may provide mutual authentication for the remote and local nodes. As the present invention focuses on authenticating the user associated with the remote node, details of mutual authentication or authentication of the server towards the client are not discussed. In step 203, initial state information is provided for the authentication procedure. Typically this initial state information includes a user identifier received from the local node. Additionally, parameters relating to the packet data connection may be provided as initial state information. Some examples of such connection parameters are mentioned below.

In step 204, at least one authentication method combination corresponding to a valid authentication is determined based on the state information. Accordingly, the term valid authentication refers to a combination of authentication methods that need to be performed successfully for authenticating a user. It is possible that there is a set of authentication method combinations, each authentication method combination corresponding to a valid authentication when the authentication methods of the combination have been successfully carried out. The authentication method combinations may provide different strengths of authentication. Thus, different access levels may be associated with the different authentication method combinations.

In step 205 it is checked that given the state information, there is at least one authentication method combination that can lead to a valid authentication. If valid authentication is not possible, the outcome of the authentication procedure is unsuccessful authentication in step 206. In this case, when the authentication procedure is carried out in connection with establishing a security protocol session, the security protocol session is not established.

In step 207, at least one of the authentication methods leading to a valid authentication is proposed to the user. The user may then select with which authentication method to proceed, and in step 208 the user is authenticated using at least one of the proposed authentication methods. It is appreciated that step 207 and/or 208 may be repeated for a number of times at this point.

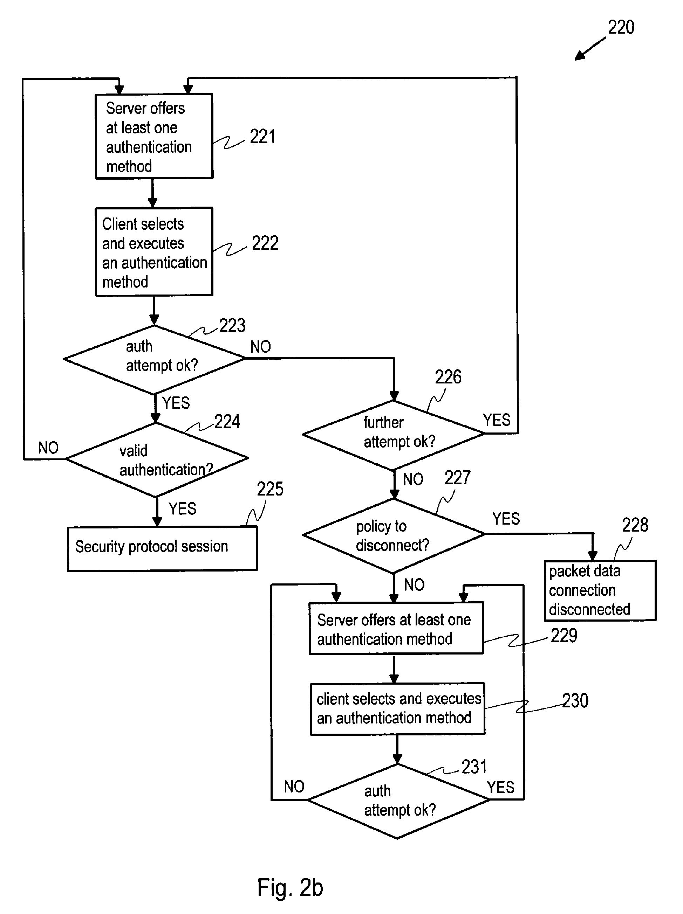

In step 209, which is optional, further state information for the authentication is collected during the authentication procedure. For example, the user may send to the server in connection with an authentication method information that can be used later on in determining authentication method combinations corresponding to valid authentication. In step 210 it is checked whether the authentication methods performed so far form an authentication method combination corresponding to a valid authentication. It is appreciated that state information collected in the optional step 209 may cause the authentication method combinations in step 210 to be different from the authentication method combinations in step 204. If further authentications methods are needed to be carried out, the method 200 continues from step 204. Otherwise, the outcome of the authentication procedure is successful authentication with associated state information (step 211). Thereafter the security protocol session may be established in step 212. Should the authentication procedure not be successful (step 206), the packet data connection is typically terminated. Alternatively, the server may continue the authentication procedure as discussed in connection with Figure 2b below. After establishing the security protocol session, it is possible to transmit data between the local node and the remote node is a secure manner. The security protocol may be used for encrypting and/or checking integrity of data transmitted between the remote and local node.

It is appreciated that the flowchart in Figure 2a does not show details of how to handle a situation where the user fails to authenticate itself in step 208. Typically the server has two options if the user authentication fails in step 208. The authentication procedure may terminated, and the outcome is unsuccessful authentication. Alternatively, the server may continue the authentication procedure if there is available an authentication method combination which may lead to a valid authentication and to which the unsuccessfully carried out authentication method does not belong. A further option is to allow the client to try and authenticate itself using an authentication method which was executed unsuccessfully earlier on.

It is appreciated that the term authentication method refers to a sequence of messages between the nodes, during which sequence the remote node (user) indicates its identity and provides proof that it possesses a piece of information considered not to be known by other users. As an example, an authentication method may be based on a user identifier and a corresponding password. As a further example, an authentication method may be a challenge-response scheme employing public key cryptography. An authentication procedure may contain any number of authentication methods.

It is appreciated that the order of steps may be different from the order shown in Figure 2. Similarly, the order of steps in other Figures may be re-arranged.

Some examples of the initial state information in step 203 are, a location of the remote node, a time of day of initiating the packet data connection, and/or a weekday of initiating the packet data connection. The location of the remote node may be determined based on the nodes network address. For example, nodes located in the local network may be authenticated using different authentication methods and nodes contacting the security protocol server over a public data network. Different user identifiers may require different authentication methods. For example, an administrator (root) may require stronger authentication than other users.

It is appreciated that although Figure 2a shows steps 201 and 211 relating to establishment of a security protocol session, steps 202-211 are applicable to re-authenticating a user during a security protocol session.

It is possible to provide authentication policy information for the security protocol, the policy information defining which authentication methods the authentication procedure should contain under which conditions. In other words, the authentication policy information may define which authentication method combinations lead to valid authentication in which circumstances. In addition to defining details for the authentication procedure carried out when establishing a session of the security protocol, authentication policy may define conditions for re-authenticating the user during the security protocol session.

An authentication policy may be defined using rules, which define that upon a certain condition a certain authentication method is to be used. The conditions may relate to the user identifiers, to information relating to the packet data connection associated with the security protocol session, or to information accumulated during the security protocol session. Specifically, the conditions in the authentication policy may relate to information accumulated during previous authentication methods and collected during the authentication procedure.

Figure 2b shows, as an example, a flowchart of a further method 220 for authenticating a user in connection with a security protocol session in accordance with an embodiment of the invention. Figure 2b shows further details on how to deal with a client who fails to authenticate itself more than an allowed number of times. The method 220 provides a way to handle brute-force authentication attacks and to collect information on these attacks.

A packet data connection has been established between a server and a client before step 221. In step 221, the server offers at least one authentication method (typically the plurality of authentication methods that the server supports) to the client. In step 222, the client selects and executes one authentication method from the offered authentication methods. If the authentication attempt in step 222 is successful (step 223), the server checks whether the authentication methods executed so far during this authentication procedure form an authentication method combination corresponding to a valid authentication in step 224. If the authentication is not yet valid, the method 220 continues from step 221. If the authentication is already valid, the server established a security protocol session in step 225.

If the authentication attempt in step 223 is not acceptable (in other words, the authentication failed for some reason), the server checks in step 226 whether the user/client is eligible for a further attempt. Typically the number of authentication attempts is limited, especially the number of authentication attempts using a given authentication method. After step 226, the method 240 continues from step 221 when a further authentication attempt is acceptable. If a further authentication attempt is not acceptable, the server checks in step 227 whether the security policy defines that the packet data connection is to be disconnected in this case. In step 228 the server disconnects the packet data connection, if needed. Alternatively, the server may continue the authentication procedure in step 229 by offering at least one authentication method for the client. The authentication methods offered in step 229 may be the same authentication methods as in step 221. Step 230 is similar to step 222. In step 231 it is checked whether the authentication attempt is step 230 was successful.

It is appreciated that irrespectively of the success/failure of the authentication attempt, the authentication method continues from step 229 - either indefinitely or at most for a defined maximum number of times. The client is informed in connection with step 229 that the authentication failed (in step 223 or 230). During steps 229-231 no information about the success of the authentication methods is sent to the client, because such information could be used in further attacks. (Typically in connection with steps 224 and 221 the client is informed that the authentication method executed in step 222 was successful. Similarly information about a partial success is typically provided to the client in steps 204-210 in Figure 2a). It is possible that steps 229-231 are executed by the server at a deliberately lower pace than steps 221-223. This is because steps 229-231 are carried out to cope with a brute-force attacker, not to authenticate a user. By slowing down the pace of steps 229-231 the server can save its resources for authenticating other users/clients.

Figure 2c shows, as an example, a flowchart of a method 240 for authenticating a user in connection with a security protocol session in accordance with an embodiment of the invention. In the method 240, the authentication procedure of a security protocol is provided with state information (step 241) and the state information is taken into account when the authentication procedure is carried out in step 242.

It is appreciated that one example of taking the state information into account is to determine a set of authentication method combinations corresponding to a valid authentication in step 204 in Figure 2a. A further example is to adjust an individual authentication method based on state information relating to earlier authentication methods carried out during the authentication procedure. For example, as discussed below, the outcome of a password authentication method may be successful for a weak password only within the local network.

A further example of taking authentication state information into account is to adjust the authentication procedure. As specific examples, consider the slowing down of the authentication procedure or a decision to continue the authentication procedure without giving any information to the client about the success of further authentication methods (as discussed above in connection with steps 229-231 in Figure 2b). In these cases, the relevant state information may be the number of failed authentication attempts. Furthermore, it may be decisive which specific authentication methods were used in the failed authentication attempts. As a further example, the authentication procedure can be adjusted based on the state information by selecting which authentication methods are offered/proposed to a client later on in the authentication procedure ― even in situations where the authentication procedure can no longer lead to a valid authentication (that is, for example, in steps 229-231).

In general, providing initial state information for the authentication procedure and/or storing state information during the authentication procedure makes handling of various situations easier than a stateless authentication procedure. In view of the specific examples provided in this description, it is clear to a skilled person that state information and security policy information can be used to together for providing a flexible authentication procedure supporting a wide range of applications from basic authentication schemes to very detailed authentication schemes which are needed, for example, in finance and banking applications.

It is possible that security protocol software provides and stores always the same pieces of state information as initial state information and as state information associated with authentication methods. Security policy information, which is typically stored in a file, is then used to define how the available state information affects the course of the authentication procedure. This way the security protocol software can support various different applications when the security policy information is modified in an appropriate way.

Regarding proposing authentication methods to the user in step 207, there are at least two ways to select which authentication methods to propose. Consider an example, where there are two authentication method combinations leading to valid authentication. The first combination consists of authentication method m1 alone. The second combination consists of authentication methods m2 and m3. In this example, a user may thus authenticate itself validly using either the authentication method m1 or the authentication methods m2 and m3. The set of authentication method combinations consists of {m1} and {m2, m3} in this example.

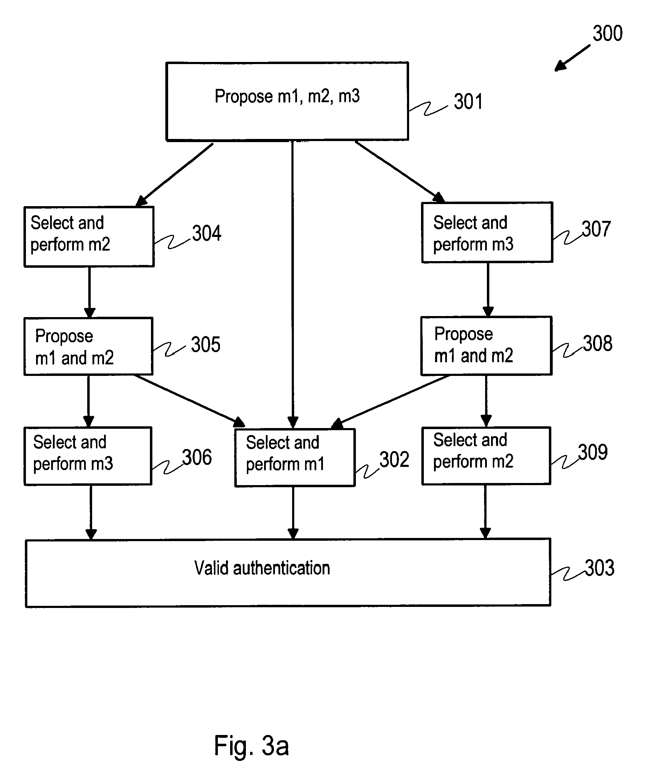

Figure 3a shows, as an example, a flowchart of method 300 of proposing authentication methods to the user in the specific example discussed above. In this method 300, the server proposes all authentication methods which lead to a valid authentication and which have not yet been carried out. In step 301, the server proposes authentication methods m1, m2 and m3 to the user. If the user selects and performs the authentication method m1 in step 302, this leads to valid authentication (step 303) and there is no need to propose further authentication methods. If the user selects and performs m2 (step 304), the server proposes authentication methods m1 and m2 in step 305. The user may select and perform m1 (step 302) or m3 (step 306). Similarly, the user may originally select and perform the authentication method m3 (step 307), in which case the server proposes authentication methods m2 and m3 in step 308. The user may then select m1 (step 302) or m2 (step 309).

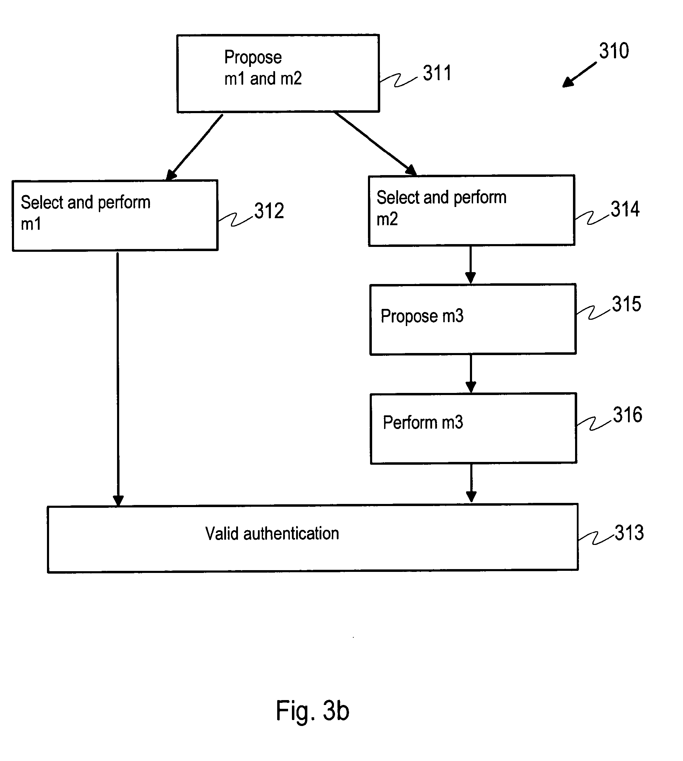

Figure 3b shows, as a further example, a flowchart of method 310 of proposing authentication methods to the user in the specific example discussed above. In this method 310, the authentication method combinations leading to valid authentication are organized as chains, and the server proposes originally only one authentication method from each separate authentication chain. In other words, the server proposes methods m1 and m2 (or, alternatively, m1 and m3) in step 311. The client effectively selects one of the chains by selecting a first authentication method from the list the server provides in step 311. Thereafter the server follows the selected authentication method chain. If the client selected m2 (step 314), the server proposes next m3 in step 315.

As the authentication method chain may branch, the server may also here propose more than one authentication method to the user. If, for example, the authentication method combinations leading to valid authentication were {m1}, {m2, m3} and {m2, m4}, then the server would propose authentication methods m3 and m4 in step 315.

If the user fails in authenticating itself using a selected authentication method, the server may, for example, terminate the authentication procedure or, if available, propose an authentication method relating to a further authentication method chain leading to valid authentication. The server may also propose to the client again an authentication method using which the client earlier on failed to authenticate itself.

It is possible that the server proposes the authentication methods in an order corresponding to the strength of the authentication provided by a certain authentication chain. For example, the authentication method proposed first in step 311 may provide the strongest authentication and thus typically also the strongest access credentials. This way, if the user supports more than one proposed authentication method, the user may select the strongest possible authentication method. The user may of course be aware of the strength of the authentication methods even without the order information. As a further example, it is possible that the user possesses information about which authentication methods to select in which situations, and this information may be used in selecting an authentication method from the proposed authentication methods. It is evident to a skilled person that further variations in the logic of proposing and selecting authentication methods are possible.

As discussed above, a security protocol server may support authentication methods m1, m2, m3 and m4 and valid combinations may be {m1}, {m2, m3} and {m2, m4}. As a concrete example, a X.509 smartcard authentication (m1) may be sufficient alone, but authentication for example with a password (m2) is valid only with authentication with a security token. The security token may be, for example, a Securld device (m3) or another security token (m4).

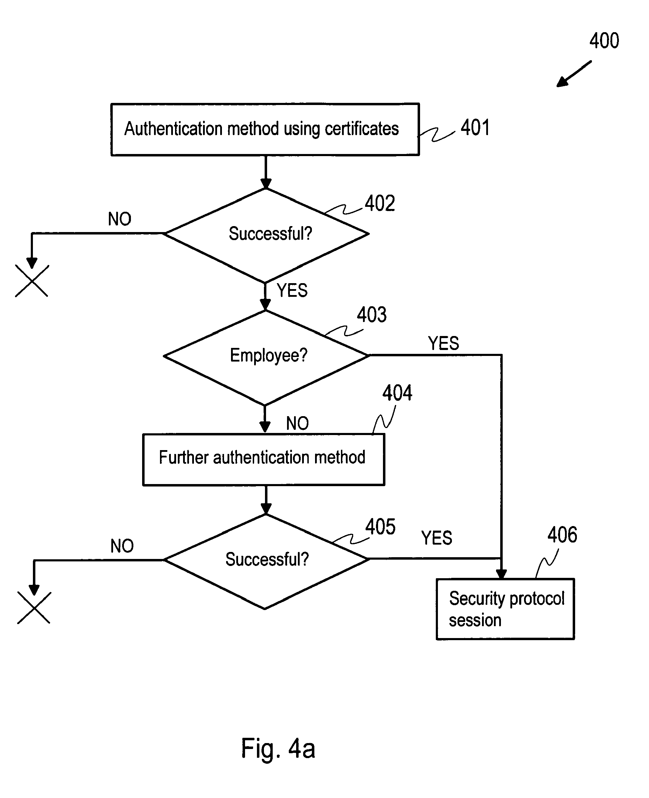

Figure 4a shows, as an example, a sequence of authentication methods in an authentication procedure 400 in accordance with an embodiment of the invention. The authentication procedure 400 may be used for authenticating users contacting a security protocol server of a company. In this example, the authentication method combinations leading to valid authentication depend on authentication state information collected during the authentication procedure. A certificate indicates whether the user is an employee, and for an employee authentication using certificates is sufficient. For a non-employee, authentication using certificates and a further authentication is needed for valid authentication.

In step 401, the user is authenticated using public key cryptography and certificates. Certificates contain information about the user, typically at least the user's identifier and his public key (or an identifier of the public key for retrieving the public key from a repository). Certificates are typically digitally signed by a trusted party (typically called a certification authority), in order to safeguard the certificate from modification. Typically, the certificates may be in accordance with the X.509 standard. When using an authentication employing certificates and public key cryptography, the security protocol server is able to verify information in the certificate and also that the user possesses the private key associated with the public key identifier in his certificate.

If the authentication is unsuccessful, the authentication procedure terminates after step 402. After a successful authentication, it is checked in step 403 whether the user is an employee of the company. This information may be present in the certificate used in step 401. If the user is an employee, the authentication policy may allow a security protocol session to be established in step 306 without further authentications. If the user is not an employee, a further authentication method may be carried out in step 404. This further authentication method may be, for example, based on passwords. If the further authentication method is successful (step 405), a security protocol session is established in step 406.

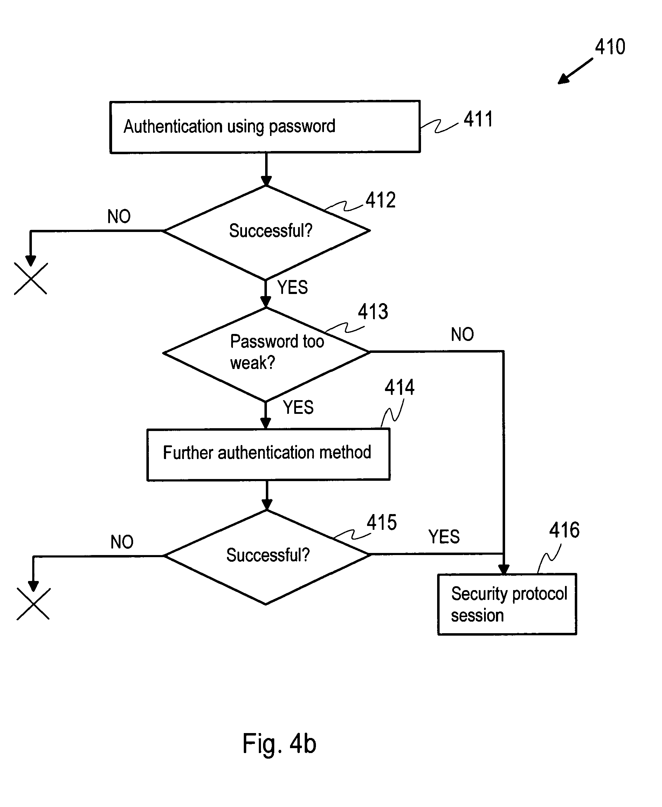

Figure 4b shows, as an example, a sequence of authentication methods in a further authentication procedure 410 in accordance with an embodiment of the invention. Also in this example, the authentication method combinations leading to valid authentication depend on authentication state information collected during the authentication procedure. The relevant state information here is the quality of the password. The quality of the password may be estimated, for example, by calculating a quality index, which takes into account the length of the password and the password having also other characters than lower-case letters.

In this authentication procedure 410, the user is first authenticated using a password in step 411. If the authentication is successful (step 412), the authentication procedure proceeds to step 413, where the quality of the password is checked. If the password is too weak, for example too short or a word that is easy to guess, a further authentication method is carried out in step 414. In response to the further authentication method being successful (step 415), the security protocol session is established in step 416.

A further example of state information associated with authentication and collected during the authentication procedure is the following. There may be a further authentication server (for example, a RADIUS server) involved in performing the authentication methods. In this case, the further authentication server may send information that can be used as state information in determining authentication method combinations that may lead to valid authentication.

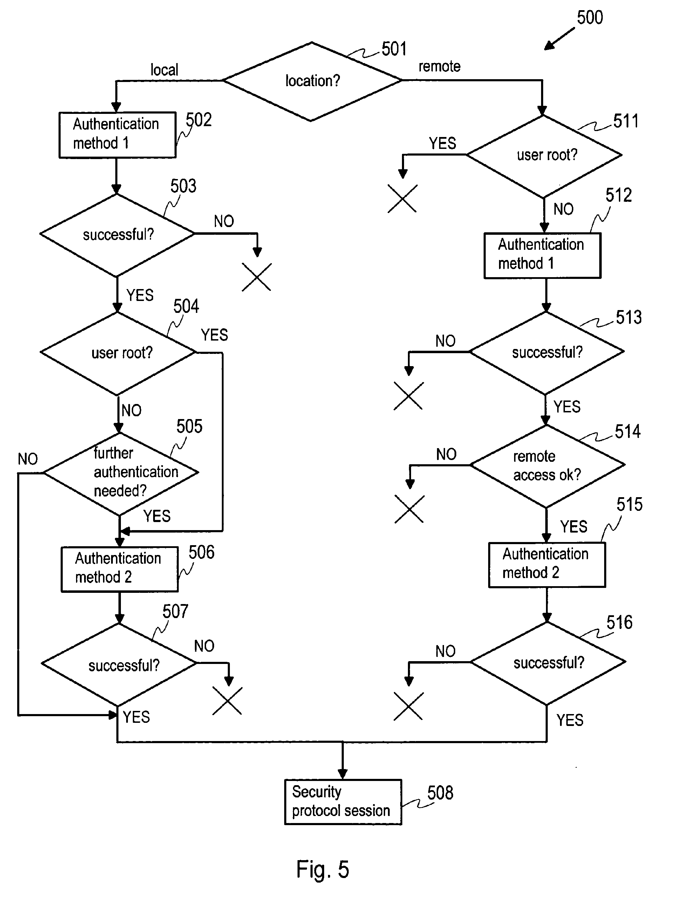

Figure 5 shows, as a further example, a sequence of authentication methods in an authentication procedure 500 in accordance with an embodiment of the invention. In the authentication procedure 500, initial state information about the user identifier and about the packet data connection is used together with information accumulated during previous authentication methods in determining authentication method combinations which may lead to valid authentication.

In step 501, the location of the remote node (client contacting the security protocol server) is checked. If the remote node is in the local network, a first authentication method is carried out in step 502. This first authentication method may be, for example, an authentication method based on certificates and public key cryptography. In response to a successful authentication, it is checked in step 503 whether the user is an administrator (root). An administrator needs to authenticate himself with a second authentication method in step 506, before a security protocol session is established in step 508 in response to a successful authentication (step 507). The second authentication method in step 506 may be, for example, based on passwords. For other users, it is checked in step 405 whether further authentication is needed. For example, if the user's private key is stored in a computer and not in a specific smartcard protected with a personal identification number, further authentication may be needed. Decision about the further authentication may be based on information present in the certificate used in step 502.

For nodes contacting the security protocol server from other network than the local network, the authentication procedure is different in the authentication procedure 500. In step 511, it is checked whether the user is an administrator. For an administrator, the authentication procedure is terminated. This means that a user with administrator access rights cannot establish a security protocol session from a remote location, only from the local network. For other users, the first authentication method is carried out in step 512. If the authentication is successful (step 513), it is checked whether the user is allowed to have remote access in step 514. Information about this may be available based on certificates used in the first authentication method in step 512. If remote access is allowed for the user, the second authentication method is carried out in step 515. In response to a successful authentication (step 516), a security protocol session is established in step 508.

It is appreciated that the details of the authentication procedures shown in Figures 4a, 4b and 5 are examples. The authentication methods may be different from those discussed in connection with Figures 4a, 4b and 5. Also the logic of dynamically determining authentication method combinations which may lead to valid authentication within an authentication procedure may be different.

Referring to Figures 4a, 4b and 5, where state information collected during the authentication procedure is used alone or in connection with initial station information, it is evident to a skilled person that it is possible to use only initial state information in determining authentication method combinations.

In addition or alternatively to determining authentication method combinations which may lead to a valid authentication, state information can be taken into account within authentication methods. Authentication methods may access the current state information, and the current state information may affect the how an authentication method is performed. For example, the outcome of a password authentication method may be successful for a weak password only within the local network.

Furthermore, it is possible to use state information to adjust the authentication procedure in more generally than by determining authentication method combinations leading to a valid authentication. As an example, a database may provide information that a user has tried to authenticate itself unsuccessfully for many times. Normally, the user's account may be closed in this situation. The information about unsuccessful authentications may be used as state information in the following ways. First, the authentication procedure in a security protocol session may be adjusted to slow down and thus most probably prevent the user from starting further security protocol session. This way the server can overcome a possible brute-force denial-of service attack. Second, the authentication procedure may be caused to continue indefinitely, either by repeating the same authentication method or a number of authentication methods. This way further information may be collected about the possible attacker.

It is possible to use the collected state information associated with authentication for handling service request received by a security protocol server during the security protocol session. One example of a service request to the security protocol server is a "TCP remote forward" request regarding port 567. This TCP remote forward request causes TCP requests sent to the TCP port 567 to be sent further to the client. In a multi-user environment, port numbers 1-1023 are typically usable only by an administrator (root).

Therefore, it may be defined that the sender of the TCP remote forward request should possess, for example, an AllowPrivilegedTcpListen extension in an X.509 certificate for the TCP remote forward request to be executed. A further example of a service request is a file transfer. Reading files at the server may be allowed for all authenticated users, but writing files at the server may be allowed only for users authenticated with a SecurID-device.

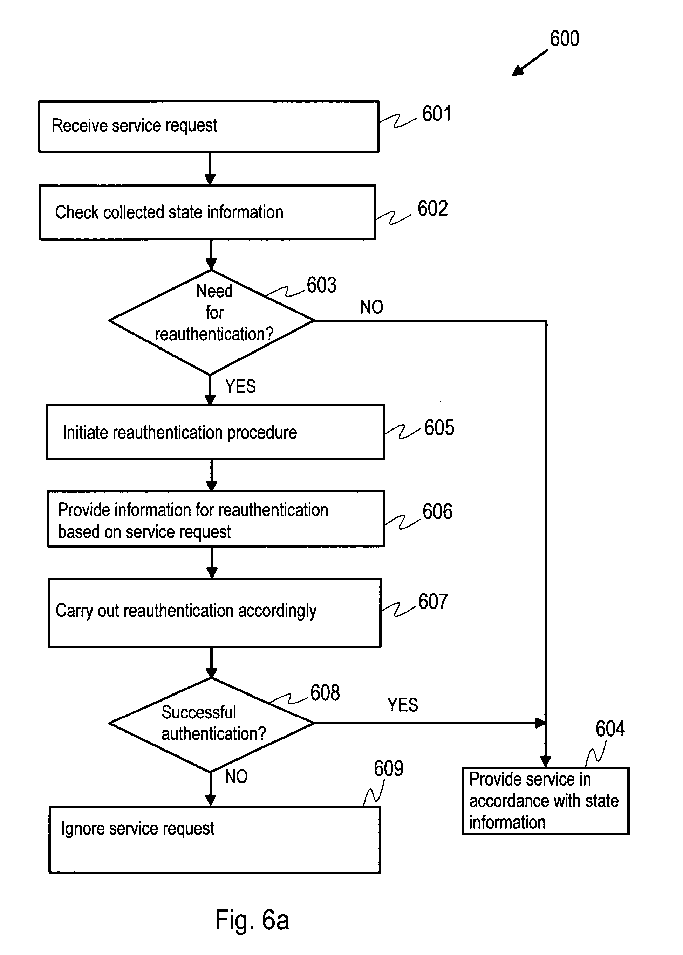

Figure 6a shows, as an example, a flowchart of a method 600 for authenticating a user in connection with a service request in accordance with an embodiment of the invention. In step 601, the security protocol server receives a service request. The server has information about which piece of authentication state information is needed for processing the requested service. This information can be defined, for example, in a security policy. In step 602, the server checks authentication state information associated with the user sending the service request. In step 603 it is checked whether reauthentication is need for the service request. If the state information of the sender already contains the relevant piece of authentication state information, the requested service is provided in step 604. It is appreciated that the service the user receives may be adjusted based on the authentication state information of the user. The reading/writing files above is an example of adjusting a service based on authentication state information.

If reauthentication is needed for the service request received in step 601, a reauthentication procedure is triggered in step 605. In step 606 information about the required authentication method(s) may be provided for the reauthentication procedure. It is appreciated that step 605 and 606 may be a single step, where the reauthentication triggering message provides also information about the required authentication method(s). In step 607, the reauthentication procedure is carried out in accordance with the required authentication method(s). If the reauthentication procedure is successful in step 608), the method 600 proceeds to step 604. Otherwise the service request is typically ignored in step 609.

Alternatively to specifying which authentication method(s) should be used in the reauthentication, it is possible to run the reauthentication procedure based the current state information as defined in steps 204-210, including the state information collection step 209. In this case, at the end of the reauthentication procedure in step 607 it is checked whether the updated authentication state information includes the relevant piece of authentication information for providing the service in step 604.

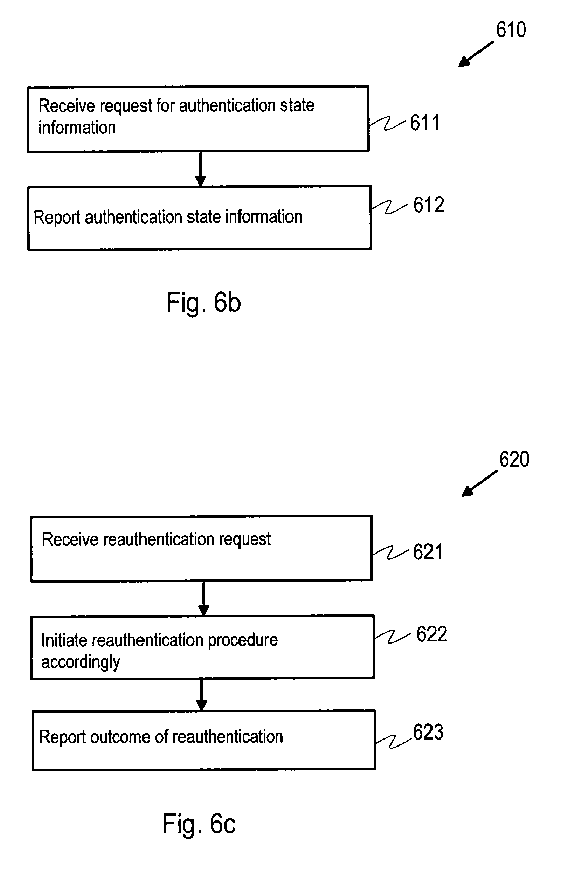

In addition or alternatively to handling service request, a security protocol server may provide an application programming interface towards applications for accessing authentication state information and/or requesting reauthentication of a user. Figure 6b shows, as an example, a flowchart of a method 610 for reporting authentication state information to an application in accordance with an embodiment of the invention. In step 611, the security protocol server receives via the application programming interface a request for authentication state information of a user. In step 612, the security protocol server reports authentication state information via the application programming interface to the application requesting the information. It is appreciated that the security protocol server may select, which pieces of authentication state information is reports back to which applications.

Figure 6c shows, as an example, a flowchart of a method 620 for reauthenticating a user in connection with a security protocol in accordance with an embodiment of the invention. In method 620, the user is reauthentication is triggered by a request received in step 621 via the application programming interface from an application. The request typically indicates which authentication method(s) should be carried out. Alternatively or in addition, the current authentication state information may affect the reauthentication procedure. In step 622, reauthentication procedure is carried out in accordance with the reauthentication request and/or current authentication state information. In step 623, the outcome of the reauthentication procedure and/or (selected pieces of) the updated authentication state information is reported back to the application.

When a security protocol server keeps track of authentication state information of users, it is possible to support more versatile security policies that Mandatory Access control in a security protocol server. For example, Content Based Information Security (CBIS) and Role Based Access Control (RBAC) can be supported, as the authentication state information collected during an authentication procedure or a reauthentication procedure may be used in making decisions in CBIS or RBAC. CBIS and/or RBAC can be supported by handling the service request in accordance with authentication state information and, if necessary, reauthenticating a sender of a service request. Alternatively or additionally, CBIS and/or RBAC can be supported by responding to authentication state information requests sent by applications and/or by triggering reauthentication of a user in response to a request received from an application for updating authentication state information.

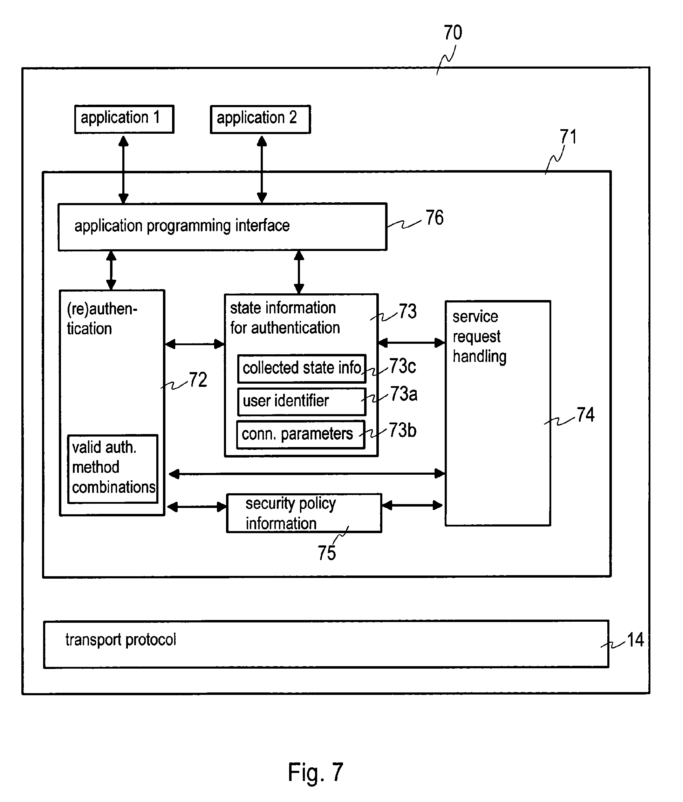

Figure 7 shows a block diagram of a security protocol server 70 in accordance with an embodiment of the invention. The security protocol server 70 includes a transfer protocol entity 14, which may be similar to the known transfer protocol entities. The security protocol entity 71 in accordance with an embodiment of the invention maintains authentication state information 73 for users. The authentication state information 73 typically includes user identifiers 73a. For each user identifier, the authentication state information may contain connection parameters 73b. Furthermore, further authentication state information 73c may be collected during the (re)authentication procedure. The (re)authentication procedure 72 in accordance with an embodiment of the invention is configured to take into account authentication state information. One way of taking the authentication state information account is to determine authentication method combinations corresponding to valid authentication based on authentication state information. As discussed above, further ways of taking authentication information into account is to adjust an individual authentication method based on the authentication state information and/or to otherwise adjust the authentication procedure. A security protocol entity 71 may include also a service request handling functionality 74, which may access the authentication state information and, if needed, trigger reauthentication. Furthermore, the security protocol entity may provide an application programming interface 76 for various applications. Applications may access the authentication state information 73 and/or trigger reauthentication 72 via the application programming interface 76.

The security protocol entity 71 also typically has authentication policy information 75. The authentication policy information 75 typically defines at least which authentication method combinations correspond to valid authentication in various situations. The authentication policy information 75 may be a set of rules.

As an example of authentication state information 73c accumulated during an authentication procedure, an authentication method based on a password might store a quality indication of the password. A certificate may be stored in its entirety, or specific fields of the certificate (such as subject-name, issuer-name and extensions) may be stored. Information 73b relating to the packet data connection serving the security protocol session may also be stored and accessed. The network address of the client node and the transfer protocol access point (for example, TCP port number) may typically be stored for use by the authentication procedure.

In the following, a specific embodiment relating to the Secure Shell protocol is discussed in more detail. It is appreciated that any features discussed in connection with this specific embodiment are applicable also in connection with the more general discussion above.

The Secure Shell is a security protocol that can be used to securely transmit data. Some specific examples of the use of Secure Shell are secure file transfers and tunneling arbitrary TCP connections over a single encrypted Secure Shell session. It is possible to transmit information relating to many data channels over one Secure Shell protocol session. For example, the data channels may relate to connections between various applications run in the endpoints of the Secure Shell protocol session. New data channels may be opened and existing data channels may be closed during the course of the Secure Shell protocol session. When the Secure Shell protocol is used between two endpoints, typically a TCP connection is first set up between the endpoints for initial key exchange. The endpoints authenticate each other after the initial key exchange, and thereafter any data packet transfer between the endpoints may be encrypted using a session key.

It is appreciated that the SSH Authentication Protocol described in the Internet-draft draft-ieft-secsh-userauth-27.txt is able to support the authentication procedures discussed above. In the following it is discussed how the Secure Shell protocol can be modified to support reauthentication procedures for the Secure Shell sessions. The Secure Shell protocol has no explicit mechanism for protocol extensions. In general, an extension mechanism should be backward compatible. For example, if one of the nodes tries to use an extension mechanism, there should be no error situation if the other node does not support the protocol extension mechanism. Furthermore, if both nodes support the extension mechanism but not the same protocol extensions, the protocol connection should continue even if one node proposes a protocol extension the other node does not support. A protocol extension mechanism should provide a possibility to change basic functionalities of the protocol, for example, packet format. It should also be possible to request various protocol extensions one by one and then start using those protocol extensions supported by both nodes at a same time.

One solution for the protocol extension mechanism for the Secure Shell protocol is to use the key exchange mechanism, which can be initiated at any time during the Secure Shell session ― except when there is already a key exchange going on. The protocol extension mechanism is implemented as a new key exchange algorithm. This new key exchange algorithm does not in fact generate new entropy for shared secrets, but transforms old secrets into new form. In other words, the new key exchange algorithm generates new session keys based on information exchanged earlier (for example, based on previous session keys), typically using part of the nonce information provided in the key exchange. After the new key exchange has been carried out, the new session keys will be taken into use together with those protocol extensions that were agreed upon.

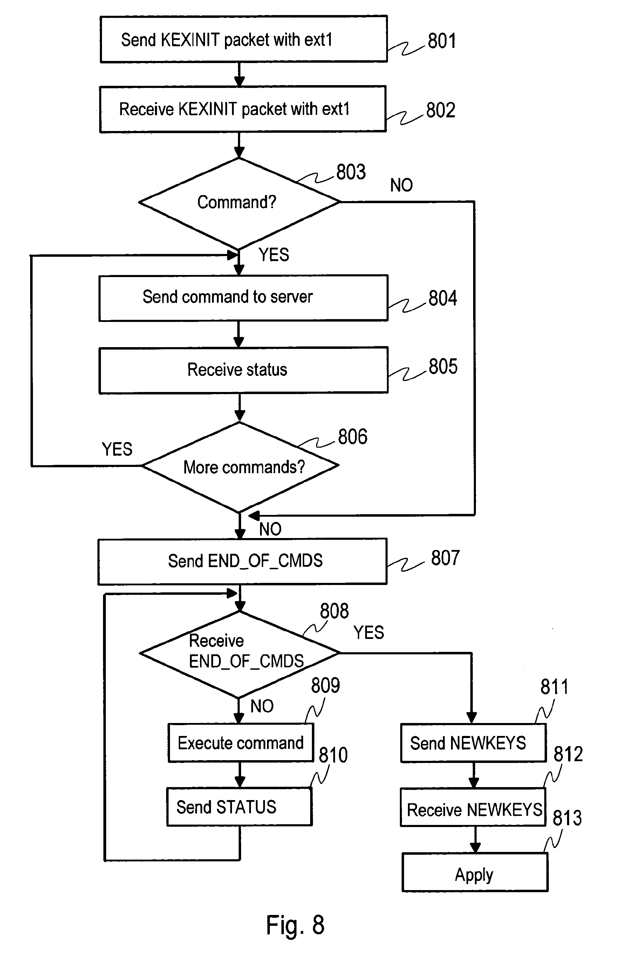

In the following, the protocol extension mechanism for the Secure Shell protocol is discussed in more detail in connection with Figure 8. The new key exchange algorithm (protocol extension mechanism) is indicated in the following by ext1 by way of an example.

In step 801, the client initiates the protocol extension mechanism by initiating a key exchange message sequence. The key exchange message sequence is initiated by sending a KEXINIT packet with ext1 as the first proposed key exchange method. In step 802, the server responds with a KEXINIT packet that has ext1 in its supported key exchange algorithms. As the client proposed ext1 and the server acknowledged support for ext1, ext1 is selected as the key exchange algorithm.

If the client initiated the exchange, it typically has at least one command to send to the server in step 803. If the client has no commands to send, the method continues is step 807. In step 804, the client sends a COMMAND packet that performs some action in the server side. The specific structure of the command packet is defined, for example, in the IEFT documentation relating to the Secure Shell protocol. The command actually does not take effect before entire key exchange is over and NEWKEYS packets are exchanged. In step 805, the server replies with a STATUS packet that contains information whether the command was successful or not. The STATUS packet contains also a possible reason for failure (for example, command not supported by the server) and can also include some command specific data. In step 806 it is checked whether the client still has one or more commands to send. If yes, the method returns to step 804. Otherwise, the client sends an END_OF_CMDS packet in step 807.

If the server has no commands to send, the client receives an END_OF_CMDS packet in step 808 and the method proceeds to step 811. The server may send a COMMAND packet that performs some action in the client side. In Figure 8, the command is shown to be executed in step 809. It is, however appreciated that the command actually does not take effect before entire key exchange is over and NEWKEYS packets are exchanged. The client replies to a COMMAND packet with a STATUS packet in step 810. The STATUS packet contains information whether the command was successful or not. Furthermore, the STATUS packet contains a possible reason for failure and can also include some command specific data.

As the server may still have one or more commands to send, the method returns to step 808. When the server sends the END_OF_CMDS packet, the method continues in step 811. In steps 811 and 812, both the server and the client send NEWKEYS packets. Immediately after this packet, all changes made by (successful) commands during the key exchange take effect in step 813. New shared secret and key exchange hash is derived from the old secret and key exchange nonce (information contained in the key exchange initialization KEXINIT packets). New algorithms and compression settings are taken into use according to algorithm lists in KEXINIT packets.

The key exchange negotiation is identical in the case where the server initiates the exchange. Roles are unchanged; the client always sends its commands first.

Since either side may choose not to send any commands during the ext1 session, the shortest possible ext1 exchange is as follows. Both sides send KEXINIT packets. The client sends END_OF_CMDS packet. The server sends END_OF_CMDS packet. Both sides send NEWKEYS packet.

There is a slight difficulty that arises from the algorithm selection logic of the Security Shell protocol when the server side is the initiator of the ext1 key exchange mechanism (protocol extension mechanism). The first algorithm in the list of the supported algorithms of the client is always selected. The client cannot always put ext1 first to its list, as this would make generation of a new key for an already selected algorithm (in other words, rekey) impossible because ext1 would always get selected.

Therefore clients and servers supporting ext1 may implement the following logic. If the client is initiating a normal key exchange (initial or rekey), it adds ext1 as the last of its supported key exchange mechanisms. On the other hand, if the client is initiating an ext1 key exchange, it adds ext1 as the first of its supported key exchange mechanisms. Similarly, if the server is initiating a normal key exchange (initial or rekey), it adds ext1 as the last of its supported key exchange mechanisms. If the server is initiating an ext1 key exchange, it adds ext1 as the first of its supported key exchange mechanisms.

If the client receives a KEXINIT message with ext1 as the first supported key exchange message it should reply with a KEXINIT message with ext1 as the first supported key exchange mechanism. If the client receives a KEXINIT message with ext1 as the first supported key exchange mechanism but has already sent its own KEXINIT where ext1 is not the first on the supported algorithms list, the key exchange is selected according to the normal algorithm selection logic and when the selected key exchange algorithm is completed, the server can try to initiate ext1 exchange again.

It is appreciated that no special attention needs to be directed to the case where both sides are initiating ext1 exchange simultaneously. This simply leads to the situation where both sides have commands to send during the ext1 exchange and this is acceptable.

When reauthenticating a user in the Secure Shell protocol, the server typically initiates the reauthentication protocol and the SSH Authentication Protocol is run in steps 804 - 806. In step 804, the server sends a COMMAND("userauthstart") packet. If the client does not support the SSH Authentication Protocol, it responds in step 805 with a STATUS(unsupported) packet. Thereafter the protocol extension procedure is properly terminated via steps 807 to 813. As the reauthentication was not successful, the Secure Shell session may or may not continue depending on the circumstances. If the reauthentication was done for handling a service request, for example, the service request is typically ignored but the Secure Shell session continues.

If the user supports the SSH Authentication Protocol, it sends a STATUS(OK) packet including a SSH_MSG_USERAUTH_REQUEST packet. The first SSH_MSG_USERAUTH_REQUEST packet indicates "none" as supported authentication methods, thus triggering the server to send a list of authentication methods the server expects the client to use. Thereafter the server and client continue in accordance with the SSH Authentication protocol, by sending the packets in the COMMAND and STATUS packets in step 804 and 805.

Once the protocol extension procedure in terminated, the server decides whether the reauthentication was successful. During the reauthentication procedure, the server may store authentication state information.

If the client wished to initiate reauthentication, the client starts the protocol extension procedure. When it is the clients turn to send commands, it will send a COMMAND("userauth-trigger") packet. The server will respond with a STATUS(OK) if it accepts the reauthentication request. Otherwise the server will respond with a STATUS(FAILURE) packet. When it is the server's turn to send commands, it will send a COMMAND("userauth_start") whereafter the reauthentication within the protocol extension procedure proceeds as discussed above.

It is appreciated that in this description the term "node" refers to any device capable of setting up data transfer connections and transmitting data using the transfer connection. The terms "client" and "server" refer to the client/server roles of nodes.

It is appreciated that embodiments of the invention may be implemented using software running on a general purpose computing device, using dedicated hardware, or using a suitable combination of software and dedicated hardware. It is appreciated that a computer program in accordance with an embodiment of the invention may be embodied on a record medium, stored in a computer memory or carried on an electrical carrier signal. A computer program product in accordance with an embodiment of the invention may be embodied on a computer readable record medium.

A system in accordance with an embodiment of the invention is typically a data processing system, which may include a number of computing devices. The system may be, for example, a server cluster supporting communications using a security protocol. A device in accordance with an embodiment of the invention is typically a computer or other computing device, for example, a server supporting communications using a security protocol.

It is appreciated that the authentication procedure in accordance with the present invention may be applied with further modifications to a security protocol entity. As an example, a security protocol entity in accordance with the present invention may be provided also with a transport distribution capacity. This means that there may be a plurality of packet data subconnections (for example, TCP sessions) associated with a single security protocol session (for example, a Secure Shell session) between the local and remote nodes.

Although preferred embodiments of the apparatus and method embodying the present invention have been illustrated in the accompanying drawings and described in the foregoing detailed description, it will be understood that the invention is not limited to the embodiments disclosed, but is capable of numerous rearrangements, modifications and substitutions without departing from the spirit of the invention as set forth and defined by the following claims.

## Claims

1. Method for authenticating a user in connection with a security protocol, the method comprising:
establishing a packet data connection to a remote node (201);
initiating an authentication procedure of the security protocol comprising a plurality of authentication methods with the remote node via the packet data connection (202);
providing state information for the authentication procedure (241), and
selecting at least one authentication method based on cumulative state information (242).

2. A method as defined in claim 1, comprising determining a set of authentication method combinations (204) for the authentication procedure based on the state information, each authentication method combination corresponding to a valid authentication.

3. A method as defined in claim 2, comprising proposing (207) to the remote node at least one authentication method leading to a valid authentication during the authentication procedure.

4. A method as defined in any preceding claim, comprising adjusting an authentication method of the authentication procedure based on the state information.

5. A method as defined in any preceding claim, comprising adjusting the authentication procedure based on the state information.

6. A method as defined in any preceding claim, comprising adjusting the pace with which the authentication procedure is executed based on the state information.

7. A method as defined in any preceding claim, comprising selecting (221) at least one authentication method to be proposed to a client based on the state information.

8. A method as defined in any preceding claim, comprising adjusting the authentication procedure to send to a client information indicating a failed authentication method in response to an executed authentication method, irrespectively of the outcome of the executed authentication method.

9. A method as defined in any preceding claim, wherein the state information comprises information relating to the packet data connection.

10. A method as defined in claim 9, wherein said information relating to the packet data connection comprises at least one of: a location of the remote node, a time of day of initiating the packet data connection, and a weekday of initiating the packet data connection.

11. A method as defined in any preceding claim, comprising storing state information associated with at least one authentication method during the authentication procedure.

12. A method as defined in claim 11, wherein said state information associated with at least on authentication method comprises at least one of: information indicating whether an authentication method was executed successfully, information indicating strength of a successfully executed authentication method, information received in certificates relating to an executed authentication method.

13. A method as defined in any preceding claim, comprising receiving a request for state information associated with a user from an application via an application programming interface.

14. A method as defined in any preceding claim, comprising
receiving a request for authenticating a user from an application via an application programming interface, and
triggering authentication procedure for the user in response to the request.

15. A method as defined in any preceding claim, comprising reporting state information associated with a user to an application via an application programming interface.

16. A method as defined in any preceding claim, comprising checking (603) whether state information associated with a user is in accordance with a service request received from the user.

17. A method as defined in claim 16, comprising triggering authentication procedure (605) for the user if the state information associated with the user is not in accordance with the service request.

18. A method as defined in claim 16 or 17, comprising providing the service in accordance with state information associated with the user.

19. A method as defined in any preceding claim, comprising establishing a security protocol session (604) with the remote node in response to successfully carrying out the authentication procedure (608).

20. A method as defined in any one of claims 1 to 18, wherein the authentication procedure is a reauthentication procedure during a security protocol session (622).

21. A method as defined in claim 20, wherein the security protocol is a Secure Shell protocol and the authentication procedure is carried out using a protocol extension mechanism.

22. A method as defined in any of claims 1 to 19, wherein the security protocol is a Secure Shell protocol.

23. A method as defined in any preceding claim, comprising taking into account security policy information (227) in carrying out the authentication procedure.

24. A computer program product comprising program instructions executable by a computing device, configured to cause a computing device or a set of computing devices to perform the steps of any one of claims 1 to 23.

25. A device (10, 70) comprising:
means (14) for establishing a packet data connection to a remote node (20);
means (12, 72) for carrying out an authentication procedure between the device and the remote node using a security protocol comprising a plurality of authentication methods;
means (73) for providing state information for the authentication procedure,
**characterized in that** the means (12, 72) for carrying out the authentication procedure are configured to select at least one authentication method based on cumulative state information (73c) from the means (73) for providing state information.

26. A device as defined in claim 25, comprising means (75) for storing security policy information, wherein the means (12, 72) for carrying out an authentication procedure are responsive also to security policy information from the means for providing security policy information.

27. A device as defined in claim 25 or 26, comprising a security protocol server (70).

28. A communication system comprising a device as defined in any of claims 25 to 27.
